# EUROPÄISCHE PATENTSCHRIFT

(11) **EP 1 799 414 B1**
(45) Veröffentlichungstag und Bekanntmachung des Hinweises auf die Patenterteilung: **23.11.2016**
(21) Anmeldenummer: 05787480.2
(22) Anmeldetag: 16.09.2005
(51) Int. Cl.: B29B 9/14, B29B 15/12

(54) **RIESELFÄHIGE PELLETS AUF BASIS CELLULOSISCHER SPINNFASERN, VERFAHREN ZU DEREN HERSTELLUNG UND DEREN VERWENDUNG**
FLOWABLE PELLETS BASED ON CELLULOSE TEXTILE FIBRES AND A METHOD FOR THE PRODUCTION THEREOF
PASTILLES COULANTES A BASE DE FIBRES TEXTILES CELLULOSIQUES, LEUR PROCEDE DE PRODUCTION ET LEUR UTILISATION

(30) Priorität: 21.09.2004 DE 102004045711
(43) Veröffentlichungstag der Anmeldung: 27.06.2007
(73) Patentinhaber: Cordenka GmbH & Co. KG, 63784 Obernburg (DE)
(72) Erfinder: FINK, Hans-Peter, 14513 Teltow (DE); GANSTER, Johannes, 14482 Potsdam (DE); UIHLEIN, Kurt, 63920 Großheubach (DE); ZENGEL, Alfred, 63906 Erlenbach (DE); ZIMMERER, Britta, 63916 Amorbach (DE)
(74) Vertreter: Oberlein, Gerriet H. R.
(86) Internationale Anmeldenummer: PCT/EP2005/009953
(87) Internationale Veröffentlichungsnummer: WO 2006/032406

(56) Entgegenhaltungen:
- EP-A- 1 136 216
- WO-A-01/83598
- WO-A-03/033227
- DE-A1- 10 029 203
- DE-A1- 19 835 983

## Beschreibung

Die Erfindung betrifft ein Verfahren zur Herstellung von rieselfähigen Pellets, Pellets der eingangs beschriebenen Art, die Verwendung dieser Pellets zur Faserverstärkung von Thermoplasten und einen aus dieser Verwendung resultierenden faserverstärkten Thermoplast.

Die Verwendung cellulosischer und/oder lignocellulosischer Fasern als Verstärkungskomponente in polymeren Matrices stellt eine zunehmend Anwendung findende Alternative zur Glasfaserverstärkung dar, die z.B. in WO 02/10272 für thermoplastische Matrices beschrieben ist. Insbesondere in der Automobilindustrie werden z.B. Hanffaser-verstärkte Bauteile für Türverkleidungen und ähnliche, wenig Last tragende Strukturen im Automobil-Innenraum verwendet, wie z.B. DE 100 52 693 beschreibt. DE 198 35 983 A1 beschreibt ein Verfahren zur Verbesserung der Haftfestigkeit von zu Verstärkungszwecken in thermoplastischen Kunststoff eingebrachten cellulosischen Naturfasern an den thermoplastischen Kunststoff, bei welchem die cellulosischen Naturfasern vor dem Einbringen in den thermoplastischen Kunststoff entweder mit mindestens einem harzartigen Duroplast, welcher auf der cellulosischen Faser aushärtet, oder mit einer fließfähigen Formulierung mit mindestens einem Dicarbonsäureanhydrid beschichtet wird. Trotz erheblicher Fortschritte in den letzten Jahren reichen die Eigenschaften der Naturfaser-verstärkten Polymere nicht an die der Glasfaser-verstärkten heran. Insbesondere in der Schlagzähigkeit gibt es erhebliche Defizite.

Unter Beibehaltung der Vorteile cellulosischer Fasern gegenüber Glasfasern, wie geringe Dichte (1,5 vs. 2,5 g/cm³), geringe Abrasivität an den Verarbeitungsmaschinen und gute Recyclingfähigkeit und Entsorgbarkeit, werden in jüngster Zeit cellulosische Spinnfasern als Verstärkungskomponente, vorwiegend in thermoplastischen Matrices, verwendet (Weigel, Ganster, Fink, Gassan, Uihlein: Kunststoffe 92, 2002, S. 95 bis 97, WO 03/033227, WO 03/016011). Neben dem in WO 03/03227 beschriebenen Pultrusionsverfahren mit anschließender Homogenisierungsstufe, also einem Zweistufenverfahren, ist selbstverständlich ein einstufiges Verfahren aus Kostengründen von Interesse. Die Schwierigkeit besteht hier, ganz anders als bei Glasfasern, in der Einbringung ausreichender Fasermengen, etwa 10 bis 50 Masse-% in die Polymerschmelze. Während bei den bruchempfindlichen Glasfasern eine schonende Einbringung von Nöten ist, werden die zäheren cellulosischen Spinnfasern nur ungenügend durch die Knet- und Mischelemente in den Verarbeitungsmaschinen zerkleinert. Ein Direkteinzug am Anfang der Extrusionsstrecke stößt deshalb auf erhebliche Schwierigkeiten. Ein vorheriges Zerteilen der Fasern oder die Verwendung von Stapelfasern wird andererseits durch die geringe Schüttdichte des Fasermaterials problematisch.

Ausgehend hiervon war es Aufgabe der vorliegenden Erfindung, Pellets aus cellulosischen Spinnfasern bereitzustellen, die zum einen eine hohe Kompaktheit aufweisen und sich andererseits durch eine gute Rieselfähigkeit auszeichnen.

Diese Aufgabe wird durch ein Verfahren zur Herstellung rieselfähiger Pellets auf Basis cellulosischer Spinnfasern gelöst, das folgende Schritte umfasst:
a) Benetzung mindestens eines cellulosischen Spinnfaserstranges mit einer vorzugsweise wässrigen Dispersion eines Polymers und/oder Oligomers zum Auf bringen einer Schlichte, wobei das Polymer ausgewählt ist aus der Gruppe umfassend Stärke und deren Derivate, Cellulosederivate, Polyvinylacetat, Polyvinylalkohol, Polyacrylat oder eine Mischung der genannten Polymere, und wobei das Oligomer ein Dextrin oder ein Derivat hiervon ist,
b) Tocknung des mindestens einen Spinnfaserstrangs und
c) Zerkleinerung des mindestens einen Spinnfaserstrangs in Pellets.

Die Schlichte sichert lediglich den Zusammenhalt der Einzelfilamente zu einem Strang, aus dem im nachfolgenden Zerkleinerungsschritt rieselfähige Pellets frei wählbarer Größe erzeugt werden. Diese Pellets können aufgrund ihrer Rieselfähigkeit mittels herkömmlicher Dosiereinrichtung zur Faserverstärkung von Thermoplasten weiterverarbeitet werden, wobei die Schlichte die Compositeigenschaften nicht bzw. nur geringfügig beeinflusst.

Unter Dispersion soll im Rahmen der vorliegenden Erfindung eine feine Verteilung eines polymeren und/oder oligomeren Stoffes in einem anderen Stoff zu verstehen sein. Der Dispersionsgrad kann von grobdispersen Systemen mit einer durchschnittlichen Teilchengröße von > 10⁻⁶ m über kolloiddisperse Systeme mit einer durchschnittlichen Teilchengröße zwischen 10⁻⁶ m und 10⁻⁹ m bis hin zu den molekulardispersen Systemen (Teilchengröße < 10⁻¹⁰ m), d.h. bis zu Lösungen reichen. Im Rahmen dieser Erfindung werden in der Regel flüssige Dispersionsmittel und feste oder flüssige disperse Polymere und/oder Oligomere eingesetzt. Solche Dispersionen sind dem Fachmann als Emulsion bzw. Sol bekannt.

In einer weiteren Variante des erfindungsgemäßen Verfahrens werden in Schritt a) 3 bis 20 Spinnfaserstränge simultan mit der Dispersion des Polymers und/oder Oligomers benetzt. Die so benetzten Spinnfaserstränge werden dann vor der Trocknung zusammengeführt. Die Zusammenführung erfolgt hierbei bevorzugt durch eine Verdrillung der Spinnfaserstränge. Durch die Verdrillung des Faserstranges bzw. der Faserstränge kann ein näherungsweise kreisförmiger Querschnitt erhalten werden. Die Verdrillung erfolgt dabei bevorzugt mit 5 bis 500 Drehungen, besonders bevorzugt mit 10 bis 30 Drehungen pro Meter Spinnfaserstrang.

Zur Auftragung der Schlichte wird eine Dispersion eines Polymers verwendet, das ausgewählt ist aus der Gruppe umfassend Stärke und deren Derivate, Cellulosederivate, insbesondere Methylcellulose oder Carboxymethylcellulose, Polyvinylacetat, Polyacrylat oder eine Mischung der genannten Polymere. Besonders bevorzugt werden wasserlösliche Polymere eingesetzt, wie z.B. Polyvinylalkohol oder Carboxymethylcellulose. Dabei können die vorzugsweise wasserlöslichen Polymere einzeln eingesetzt werden. Es ist aber auch möglich, Gemische aus zwei oder mehreren der genannten vorzugsweise wasserlöslichen Polymere einzusetzen, sofern sich das Gemisch dispergieren lässt, wie z.B. ein Gemisch aus Polyvinylacetat und Carboxymethylcellulose oder ein Gemisch aus Polyvinylalkohol und Stärke.

Ebenso können aber auch Dispersionen von oligomeren Substanzen eingesetzt werden, insbesondere von Dextrin oder dessen Derivaten, wobei Lösungen der oligomeren Substanzen, insbesondere Lösungen von Dextrin oder dessen Derivaten besonders bevorzugt sind.

Die Konzentration der Schlichte-Dispersion wird in jedem Fall so eingestellt, dass einerseits der Faserstrang bzw. die Faserstränge gut benetzt bzw. durchtränkt werden können, d.h. die Viskosität der Dispersion darf nicht zu hoch sein, und andererseits der Faserzusammenhalt gewährleistet wird, um eine Stabilität der Pellets zu erreichen. Geeignete Konzentrationen für die Schlichte-Dispersion bewegen sich bevorzugt im Bereich von 2 bis 20 Gew.-%, besonders bevorzugt von 4 bis 10 Gew.-%. Um die Viskosität zu erniedrigen und damit den Auftrag zu erhöhen kann es zweckmäßig sein, die Dispersion zu erwärmen, beipielsweise auf 60 °C.

Als cellulosische Spinnfasern eignen sich sowohl synthetische Cellulosefasern als auch cellulosehaltige Naturfasern, insbesondere Hanf oder Flachs. Besonders bevorzugte Fasern sind Viskosefasern und/oder Lyocellfasern.

Erfindungsgemäß kann die Schlichte-Dispersion entweder im Garnherstellungsprozess auf zuvor nicht getrocknete Fasern oder in einem Nachbehandlungsschritt auf das fertig konfektionierte Garn aufgebracht werden.

Zur Benetzung des mindestens einen Spinnfaserstrangs in Schritt a) des erfindungsgemäßen Verfahrens ist grundsätzlich jede Vorgehensweise geeignet, die es der Dispersion ermöglicht, einen möglichst großen Teil der Einzelfilamente des Spinnfaserstrangs zu belegen. Somit sind alle Vorgehensweisen geeignet, mit denen man üblicherweise Schlichten auf Fasern aufträgt. Beispielsweise kann der Spinnfaserstrang durch Besprühen mit einer Dispersion des Polymeren und/oder Oligomeren benetzt werden. Ebenso ist es möglich, den Spinnfaserstrang durch eine mit einer Rille versehene Walze zu führen, wobei sich in der Rille die Dispersion des Polymeren und/oder Oligomeren befindet. Vorzugsweise erfolgt die Benetzung des mindestens einen Spinnfaserstrangs durch Eintauchen der cellulosischen Spinnfasern in die vorzugsweise wässrige Dispersion des Polymers und/oder Oligomers, d.h. durch Eintauchen in die Schlichte-Dispersion. Beispielsweise besteht eine bevorzugte Ausführungsvariante des Verfahrens darin, dass die cellulosischen Endlosfasern in einem kontinuierlichen Prozess durch mindestens ein Bad, das die Schlichte-Dispersion enthält, gezogen wird und so die Fasern vollständig benetzt werden. Werden dabei mehrere Faserstränge simultan in Abhängigkeit von deren Titer in der Lösung getränkt, so können später Pellets mit gut zu verarbeitenden Querdimensionen erhalten werden.

Ferner wird die der Erfindung zugrunde liegende Aufgabe gelöst durch rieselfähige Pellets auf Basis von cellulosischen Spinnfasern aus mindestens einem zerkleinerten und eine Schlichte aus einem vorzugsweise wasserlöslichen Polymer und/oder Oligomer aufweisenden Spinnfaserstrang, wobei das Polymer ausgewählt ist aus der Gruppe umfassend Stärke und deren Derivate, Cellulosederivate, Polyvinylacetat, Polyvinylalkohol, Polyacrylat oder eine Mischung der genannten Polymere, und wobei das Oligomer aus einem Dextrin oder ein Derivat hiervon besteht.

Vorzugsweise bestehen die Spinnfasern der Pellets aus synthetischen Cellulosefasern und/oder cellulosehaltigen Naturfasern, insbesondere Hanf oder Flachs.

Besonders bevorzugt sind Spinnfasern aus Viskose und/oder Lyocellfasern.

Die Schlichte besteht aus einem Polymer ausgewählt aus der Gruppe umfassend Stärke und deren Derivate, Cellulosederivate, insbesondere Methylcellulose oder Carboxymethylcellulose, Polyvinylacetat und Polyacrylat. Besonders bevorzugt werden als Schlichte wasserlösliche Polymere eingesetzt, wie z.B. Polyvinylalkohol oder Carboxymethylcellulose. Dabei können die vorzugsweise wasserlöslichen Polymere einzeln eingesetzt werden. Es ist aber auch möglich, Gemische aus zwei oder mehreren der genannten vorzugsweise wasserlöslichen Polymere zu bilden, sofern sich das Gemisch dispergieren lässt, wie z.B. ein Gemisch aus Polyvinylacetat und Carboxymethylcellulose oder ein Gemisch aus Polyvinylalkohol und Stärke.

Ebenso können die Pellets aber auch eine Schlichte aus einem oligomeren Material, insbesondere aus einem oligomeren Dextrin oder aus dessen Derivaten aufweisen.

Die Pellets weisen einen im wesentlichen kreisförmigen oder bevorzugt abgeflachten Querschnitt auf, bevorzugt mit einem Durchmesser von 1 bis 6 mm.

In einer weiteren bevorzugten Ausführungsform haben die Pellets eine Länge im Bereich von 1 bis 40 mm, insbesondere von 2 bis 10 mm.

In einer weiteren bevorzugten Ausführungsform haben die Pellets eine Schüttdichte im Bereich von 100 g/l bis 450 g/l, insbesondere von 150 g/l bis 450g/l und ganz besonders bevorzugt von 150 g/l bis 300 g/l.

Vorzugsweise werden die erfindungsgemäßen rieselfähigen Pellets nach dem bereits beschriebenen erfindungsgemäßen Verfahren hergestellt, wobei, wie bereits erwähnt, für das Aufbringen der Schlichte zwei Varianten bevorzugt sind: In der einen Variante wird die Schlichte im Garnherstellungsprozess auf Fasern aufgebracht, die zuvor nicht getrocknet wurden. Eine weitere Variante des erfindungsgemäßen Verfahrens sieht vor, dass die Schlichte auf das fertigkonfektionierte Garn in einem Nachbehandlungsschritt aufgebracht wird.

Verwendung finden die erfindungsgemäßen rieselfähigen Pellets zur Faserverstärkung von Thermoplasten. Daher ist die Verwendung der erfindungsgemäßen rieselfähigen Pellets zur Faserverstärkung von Thermoplasten ebenfalls Gegenstand der vorliegenden Erfindung.

Ferner werden faserverstärkte Thermoplasten resultierend aus der vorstehend genannten Verwendung bereitgestellt enthaltend aufgeschlossene rieselfähige Pellets der vorstehend beschriebenen Art. Dies bedeutet, dass die Pellets während des Herstellungsvorgangs des faserverstärkten Thermoplasten aufgeschlossen, d.h. in der Schmelze des Thermoplasten dispergiert werden, wodurch die zuvor in den Pellets enthaltenen Fasern im fertigen, d.h. im verfestigten faserverstärkten Thermoplasten in einem dispergierten Zustand vorliegen.

Vorzugsweise weist der verfestigte faserverstärkte Thermoplast 10 bis 60 Gew.-%, insbesondere 15 bis 35 Gew.-% der Pellets auf.

Als Thermoplasten kommen alle aus dem Stand der Technik bekannten thermoplastischen Materialien in Frage, vorzugsweise solche, die unter einer Massetemperatur von 240 °C thermoplastisch verarbeitbar, insbesondere extrudierbar sind.

Daher ist im faserverstärkten Thermoplast der Thermoplast ausgewählt aus der Gruppe bestehend aus Homo- und Copolymeren von Polypropylen und Polyethylen, Polyamid 11, Polyamid 12, Polyamid 6, Polyestern wie z.B. Polyethylenterephthalat, Polystyrol und schlagzähen Modifikationen hiervon, Polymilchsäure, weichgemachtem Polyvinylchlorid sowie thermoplastischen Elastomeren, Mischungen und Modifikationen hiervon.

Die Schlagzähigkeit wird in der vorliegenden Erfindung in Schlagbiegeversuchen bestimmt, die in K. Stoeckert, "Kunststoff Lexikon", 8. Auflage, Carl Hauser Verlag München Wien, 1992, Seite 528, Bild 94, linker Teil, beschreiben sind, wobei nach DIN EN ISO 179 mit einem Prüfkörper, der die Abmessungen 80 mm x 10 mm x 4 mm hat, gemessen wird. Im Rahmen der vorliegenden Erfindung bedeutet Schlagzähigkeit nach Charpy, dass eine Anordnung wie im vorstehend erwähnten Bild 94, linker Teil mit breitseitigem Schlag jedoch ohne Kerbe beaufschlagt wird. Schlagzähigkeit nach Charpy (gekerbt) bedeutet in der vorliegenden Erfindung ebenfalls, dass eine Anordnung wie im vorstehend erwähnten Bild 94, linker Teil, verwendet wird, jedoch mit dem Unterschied, dass mit schmalseitigem Schlag beaufschlagt wird und die Kerbe die Kerbform A aufweist, die in DIN EN ISO 179 beschrieben ist.

Vorzugsweise weist der verfestigte faserverstärkte Thermoplast eine Schlagzähigkeit nach Charpy bei Raumtemperatur (23°C) von mindestens 30 kJ/m² auf.

In einer weiteren bevorzugten Ausführungsform weist der verfestigte faserverstärkte Thermoplast eine Schlagzähigkeit nach Charpy (gekerbt) bei Raumtemperatur (23°C) von mindestens 5 kJ/m² auf.

Der verfestigte faserverstärkte Thermoplast zeichnet sich durch hohe Werte der Schlagzähigkeit nach Charpy aus. In bevorzugten Ausführungsformen werden Werte erreicht, die
- bei 23°C um bis zu 46 %, bzw. gekerbt um bis zu 31 %, und
- bei -18 °C um bis zu 43 %, bzw. gekerbt um bis zu 58 %
höher liegen als die entsprechenden Werte eines Referenzmaterials aus dem Stand der Technik.

Weiterhin können im verfestigten faserverstärkten Thermoplasten zusätzliche Additive, insbesondere Haftvermittler, enthalten sein.

Der verfestigte faserverstärkte Thermoplast zeichnet sich durch eine gleichmäßige Verteilung der Verstärkungsfasern in Thermoplasten aus, insbesondere dann, wenn die Verstärkungsfaser einen hohen Grad an Fibrillierung aufweist, wie dies z.B. bei Lyocellfasern der Fall ist. Dies führt zu einer erhöhten Steifigkeit des verfestigten faserverstärkten Thermoplasten, die sich, wenn man ihn in Form eines Schüttgutes, z.B. in Pelletform, weiterverarbeitet, durch eine verbesserte Dosierbarkeit des Schüttgutes bemerkbar macht. Daher und natürlich auch wegen der bereits beschriebenen vorteilhaften mechanischen Eigenschaften, lässt sich der aus der erfindungsgemäßen Verwendung der rieselfähigen Pellets resultierende verfestigte faserverstärkte Thermoplast vorteilhaft zur Herstellung von faserverstärkten Formteilen verwenden, die insbesondere in der Automobilindustrie eingesetzt werden, wie z.B. zur Herstellung von Armaturenbrettern, Türverkleidungen und anderen Last tragenden Strukturen im Automobil-Innenraum.

Die Cellulosederivate des Verfahrens und der rieselfähigen Pellets gemäß vorliegender Erfindung sind vorzugsweise Methylcellulose oder Carboxymethylcellulose. Die nachfolgenden Beispiele erläutern die Herstellung der erfindungsgemäßen rieselfähigen Pellets und deren Verwendung zur Herstellung von Normprüfkörpern.

### Beispiel 1:

10 Stränge des Cellulose-Regeneratfasermaterials Cordenka 700 der Firma Cordenka GmbH (1350 Einzelfilamente pro Strang, Einzelfasertiter 1,8 dtex) werden durch eine Lösung mit 5 Masse-% Hydroxypropylstärke (HPS, Emcol H7 der Firma Emslandstärke) geleitet, zusammengeführt und ein Drall von 20 Drehungen pro Meter aufgegeben. Der Mehrfach-Strang wird auf eine Spule gewickelt und anschließend bei einer Temperatur von 80 °C für 2 Stunden in einem herkömmlichen Trockenschrank getrocknet. Der getrocknete Mehrfach-Strang, dessen Durchmesser 2 mm beträgt, wird mit einer Schere zu Pellets mit 4 mm Länge geschnitten. Bei größeren Mengen können kommerzielle Schneidwerkzeuge (z.B. der Firma Wolfangel) eingesetzt werden.

Zur Verarbeitung der Pellets werden diese in eine separate Dosiervorrichtung (K-Tron K-CV-KT20) gegeben und mit dem Polypropylengranulat (Stamylan P 412MN40 der Firma Sabic) und dem Haftvermittler (Fusabond MD353D der Firma DSM) zusammen dem Mischextruder (ZE 25 der Firma Berstorff) zugeführt und extrudiert, sodass ein 25 Masse-% Faseranteil realisiert wird. Nach Abkühlung entstehen faserverstärkte Polypropylen-Pellets, die nach Trocknung (4h, 110°C Trockenschrank) zu Normprüfkörpern (ISO 527) mittels einer Spritzgussmaschine (Allrounder 270 M500-90 der Firma Arburg) verarbeitet werden. Ausgewählte mechanische Eigenschaften sind in Tabelle 1 im Vergleich zu den im herkömmlichen Verfahren (Weigel, Ganster, Fink, Gassan, Uihlein: Kunststoffe 92, 2002, S. 95 bis 97) hergestellten Kompositen angegeben. Aus Tabelle 1 ist ersichtlich, dass die erfindungsgemäßen Pellets bei etwa gleichen Werten von Festigkeit, Modul und Dehnung das Referenzmaterial bezüglich des Schlagzähverhaltens nach Charpy und insbesondere nach Charpy (gekerbt) deutlich übertreffen. Die Schlagzähigkeit nach Charpy (gekerbt) ist um 40 % höher als die des Referenzmaterials.

**Tabelle 1:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 71 | 2,5 | 10,2 | 61 _{23°C} | 10 _{23°C} |
| aus Pellets (HPS) | 70 | 2,4 | 10,7 | 78 _{23°C} | 14 _{23°C} |

### Beispiel 2

Es wird wie in Beispiel 1 verfahren mit dem Unterschied, dass eine 4 Masse-%ige Lösung von Methylcellulose (MC, baufan Tapetenkleister) verwendet wird. Tabelle 2 zeigt die mechanischen Eigenschaften im Vergleich zu den mechanischen Eigenschaften, die mit dem aus dem Stand der Technik bekannten Verfahren erhalten werden (Referenz). Tabelle 2 zeigt, dass ein faserverstärkter Thermoplast, dessen Fasern mit MC benetzt wurden, bei in etwa gleichen Werten von Modul, Dehnung und Charpy (gekerbt)-Schlagzähigkeit eine geringere Festigkeit und eine höhere Charpy-Schlagzähigkeit aufweist.

**Tabelle 2:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 71 | 2,5 | 10,2 | 61_{23°C} | 10_{23°C} |
| aus Pellets (MC) | 65 | 2,3 | 11,8 | 69_{23°C} | 102_{3°C} |

### Beispiel 3:

2 Garne des Cellulose-Regeneratfasermaterials Cordenka 700 der Firma Cordenka GmbH (1350 Einzelfilamente pro Garn, Einzelfasertiter 2440 dtex) werden in einem kontinuierlichen Dip-, Trocken- und Schneidprozess mit einer Geschwindigkeit von 31,5 m/min über eine mit einer Schlichtelösung beaufschlagte Benetzungsrolle geführt und dabei mit der Schlichtelösung gedippt, getrocknet und geschnitten. Als Schlichtelösung dient eine nichtionische wässrige Dispersion eines Vinylacetat-Homopolymeren (Rhodopas^{®} A 010, Fa. Rhodia PPMC) mit einem Feststoffgehalt von 8.3 Gew.-%. Die Beaufschlagung der Benetzungswalze mit der Schlichtelösung erfolgt so, dass die gedippten Garne nach dem Trocknen, d.h. im ofentrockenen Zustand einen Schlichte-Auftrag von 10 Gew.-% aufweisen. Die Trocknung erfolgt kontinuierlich und kontaktlos in drei Rohröfen (Heraeus Typ RO 07/250, Nenntemperatur 1000 °C), die hintereinander durchlaufen werden. Hierbei hat der erste Ofen eine Temperatur von 560 °C, der zweite Ofen eine Temperatur von 220 °C und der dritte Ofen eine Temperatur von 175 °C. Die getrockneten Garne werden mit Hilfe einer Stapelfaserschneidmaschine (Fa- Neumag NMC 150) zu Kurzschnittmaterial mit einer Länge von 4 mm geschnitten. Es resultiert ein rieselfähiges Kurzschnittmaterial.

Zur Verarbeitung des rieselfähigen Kurzschnittmaterials wird dieses in eine separate Dosiervorrichtung (K-Tron K-CV-KT20) gegeben und mit einem Polypropylengranulat (Stamylan P 412MN40 der Firma Sabic) und einem Haftvermittler (Fusabond MD353D der Firma DSM) zusammen einem Mischextruder (ZE 25 der Firma Berstorff) zugeführt und extrudiert, sodass 30 Masse-% Faseranteil realisiert wird. Nach Abkühlung entstehen faserverstärkte Polypropylen-Pellets, die nach Trocknung (4h, 110 °C, Trockenschrank) zu Normprüfkörpern (ISO 527) mittels einer Spritzgussmaschine (Allrounder 270 M500-90 der Firma Arburg) verarbeitet werden.

Ausgewählte mechanische Eigenschaften sind in Tabelle 3 im Vergleich zu den im herkömmlichen Verfahren (Weigel, Ganster, Fink, Gassan, Uihlein: Kunststoffe 92, 2002, S. 95 bis 97) hergestellten Kompositen angegeben. Aus Tabelle 3 ist ersichtlich, dass verglichen mit dem Referenzmaterial der erfindungsgemäße faserverstärkte Thermoplast, dessen Fasern mit Polyvinylacetat aus einer Rhodopas^{®}-Dispersion benetzt wurden, bei geringerer Festigkeit, etwa gleichen Werten von Modul, Dehnung und Schlagzähigkeit nach Charpy bei 23°C und bei -18°C eine um 58 % erhöhte Schlagzähigkeit nach Charpy (gekerbt) bei 23°C aufweist.

**Tabelle 3:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 74 | 2,8 | 8,5 | 56 _{23°C} | 11,3 _{23°C} |
| | | | | 57_{-18°C} | 8,7_{-18°C} |
| aus Pellets (Rhodopas^{®}) | 58,9 | 2,9 | 8,7 | 60 _{23°C} | 17,8 _{23°C} |
| | | | | 54,3_{-18°C} | - |

### Beispiel 4:

2 Garne des Cellulose-Regeneratfasermaterials Cordenka 700 der Firma Cordenka GmbH (1350 Einzelfilamente pro Garn, Einzelfasertiter 2440 dtex) werden in einem kontinuierlichen Dip-, Trocken- und Schneidprozess mit einer Geschwindigkeit von 31,5 m/min über eine mit einer Schlichtelösung beaufschlagte Benetzungsrolle geführt und dabei mit der Schlichtelösung gedippt, getrocknet und geschnitten. Als Schlichtelösung dient eine nichtionische wässrige PolyvinylacetatDispersion (Perapret^{®} VA 010, Fa. BASF) mit einem Feststoffgehalt von 8 Gew.-%. Die Beaufschlagung der Benetzungswalze mit der Schlichtelösung erfolgt so, dass die gedippten Garne nach dem Trocknen, d.h. im ofentrockenen Zustand einen Schlichte-Auftrag von 14,5 Gew.% aufweisen. Die Trocknung erfolgt kontinuierlich und kontaktlos in drei Rohröfen (Heraeus Typ RO 07/250, Nenntemperatur 1000 °C), die hintereinander durchlaufen werden. Hierbei hat der erste Ofen eine Temperatur von 560 °C, der zweite Ofen eine Temperatur von 220 °C und der dritte Ofen eine Temperatur von 175 °C. Die getrockneten Garne werden mit Hilfe einer Stapelfaserschneidmaschine (Fa- Neumag NMC 150) zu Kurzschnittmaterial mit einer Länge von 4 mm geschnitten. Es resultiert ein rieselfähiges Kurzschnittmaterial.

Zur Verarbeitung des rieselfähigen Kurzschnittmaterials wird dieses in eine separate Dosiervorrichtung (K-Tron K-CV-KT20) gegeben und mit einem Polypropylengranulat (Stamylan P 412MN40 der Firma Sabic) und einem Haftvermittler (Fusabond MD353D der Firma DSM) zusammen einem Mischextruder (ZE 25 der Firma Berstorff) zugeführt und extrudiert, sodass 30 Masse-% Faseranteil realisiert wird. Nach Abkühlung entstehen faserverstärkte Polypropylen-Pellets, die nach Trocknung (4h, 110 °C, Trockenschrank) zu Normprüfkörpern (ISO 527) mittels einer Spritzgussmaschine (Allrounder 270 M500-90 der Firma Arburg) verarbeitet werden.

Ausgewählte mechanische Eigenschaften sind in Tabelle 4 im Vergleich zu den im herkömmlichen Verfahren (Weigel, Ganster, Fink, Gassan, Uihlein: Kunststoffe 92, 2002, S. 95 bis 97) hergestellten Kompositen angegeben. Aus Tabelle 4 ist ersichtlich, dass verglichen mit dem Referenzmaterial der erfindungsgemäße faserverstärkte Thermoplast, dessen Fasern mit Polyvinylacetat aus einer Perapret^{®} VA - Dispersion benetzt wurden, bei geringerer Festigkeit, etwa gleichen Werten von Modul, Dehnung und Schlagzähigkeit nach Charpy eine um 49 % erhöhte Schlagzähigkeit nach Charpy (gekerbt) bei 23°C aufweist.

**Tabelle 4:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 74 | 2,8 | 8,5 | 56_{23°C} | 11,3_{23°C} |
| | | | | 57_{-18°C} | 8,7_{-18°C} |
| aus Pellets (Perapret^{®} VA) | 56 | 2,6 | 9 | 59_{23°C} | 16,8_{23°C} |
| | | | | 65,6_{-18°C} | - |

### Beispiel 5:

2 Garne des Cellulose-Regeneratfasermaterials Cordenka 700 der Firma Cordenka GmbH (1350 Einzelfilamente pro Garn, Einzelfasertiter 2440 dtex) werden in einem kontinuierlichen Dip-, Trocken- und Schneidprozess mit einer Geschwindigkeit von 21,5 m/min über eine mit einer Schlichtelösung beaufschlagte Benetzungsrolle geführt und dabei mit der Schlichtelösung gedippt, getrocknet und geschnitten. Als Schlichtelösung dient eine nichtionische wässrige PolyacrylatLösung (Schlichte CB, Fa. BASF) mit einem Feststoffgehalt von 4 Gew.-%. Die Beaufschlagung der Benetzungswalze mit der Schlichtelösung erfolgt so, dass die gedippten Garne nach dem Trocknen, d.h. im ofentrockenen Zustand einen Schlichte-Auftrag von 4,8 Gew.-% aufweisen. Die Trocknung erfolgt kontinuierlich und kontaktlos in drei Rohröfen (Heraeus Typ RO 07/250, Nenntemperatur 1000 °C), die hintereinander durchlaufen werden. Hierbei hat der erste Ofen eine Temperatur von 410 °C, der zweite Ofen eine Temperatur von 220 °C und der dritte Ofen eine Temperatur von 175 °C. Die getrockneten Garne werden mit Hilfe einer Stapelfaserschneidmaschine (Fa- Neumag NMC 150) zu Kurzschnittmaterial mit einer Länge von 4 mm geschnitten. Es resultiert ein rieselfähiges Kurzschnittmaterial.
Zur Verarbeitung des rieselfähigen Kurzschnittmaterials wird dieses in eine separate Dosiervorrichtung (K-Tron K-CV-KT20) gegeben und mit einem Polypropylengranulat (Stamylan P 412MN40 der Firma Sabic) und einem Haftvermittler (Fusabond MD353D der Firma DSM) zusammen einem Mischextruder (ZE 25 der Firma Berstorff) zugeführt und extrudiert, sodass 30 Masse-% Faseranteil realisiert wird. Nach Abkühlung entstehen faserverstärkte Polypropylen-Pellets, die nach Trocknung (4h, 110 °C, Trockenschrank) zu Normprüfkörpern (ISO 527) mittels einer Spritzgussmaschine (Allrounder 270 M500-90 der Firma Arburg) verarbeitet werden.

Ausgewählte mechanische Eigenschaften sind in Tabelle 5 im Vergleich zu den im herkömmlichen Verfahren (Weigel, Ganster, Fink, Gassan, Uihlein: Kunststoffe 92, 2002, S. 95 bis 97) hergestellten Kompositen angegeben. Aus Tabelle 5 ist ersichtlich, dass verglichen mit dem Referenzmaterial der erfindungsgemäße faserverstärkte Thermoplast, dessen Fasern mit Polyacrylat aus einer Schlichte CB - Lösung benetzt wurden, etwa gleiche Werte von Festigkeit, Modul, Dehnung und Schlagzähigkeit nach Charpy und Charpy (gekerbt) aufweist.

**Tabelle 5:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 74 | 2,8 | 8,5 | 56 _{23°C} | 11,3 _{23°C} |
| | | | | 57_{-18°C} | 8,7_{-18°C} |
| aus Pellets (Schlichte CB) | 70,1 | 2,5 | 8 | 50 _{23°C} | 9,7_{23°C} |
| | | | | 53,9_{-18°C} | |

### Beispiel 6:

2 Garne des Cellulose-Regeneratfasermaterials Cordenka 700 der Firma Cordenka GmbH (1350 Einzelfilamente pro Garn, Einzelfasertiter 2440 dtex) werden in einem kontinuierlichen Dip-, Trocken- und Schneidprozess mit einer Geschwindigkeit von 47 m/min über eine mit einer Schlichtelösung beaufschlagte Benetzungsrolle geführt und dabei mit der Schlichtelösung gedippt, getrocknet und geschnitten. Als Schlichtelösung dient eine Mischung aus gleichen Gewichtsteilen einer 8,3 Gew.-% Festkörper enthaltenden wässrigen Polyvinylacetat-Dispersion (Ponal, Fa. Henkel KGaA) und einer 3 Gew.-% Festkörper enthaltenden wässrigen Dispersion einer Carboxymethylcellulose (CMC, Handelsname DTE NV, Fa. Mikrotechnik CMC). Die Beaufschlagung der Benetzungswalze mit der Schlichtelösung erfolgt so, dass die gedippten Garne nach dem Trocknen, d.h. im ofentrockenen Zustand einen Schlichte-Auftrag von 8,4 Gew.-% aufweisen. Die Trocknung erfolgt kontinuierlich und kontaktlos in drei Rohröfen (Heraeus Typ RO 07/250, Nenntemperatur 1000 °C), die hintereinander durchlaufen werden. Hierbei hat der erste Ofen eine Temperatur von 560 °C, der zweite Ofen eine Temperatur von 220 °C und der dritte Ofen eine Temperatur von 175 °C. Die getrockneten Garne werden mit Hilfe einer Stapelfaserschneidmaschine (Fa- Neumag NMC 150) zu Kurzschnittmaterial mit einer Länge von 4 mm geschnitten. Es resultiert ein rieselfähiges Kurzschnittmaterial.

Zur Verarbeitung des rieselfähigen Kurzschnittmaterials wird dieses in eine separate Dosiervorrichtung (K-Tron K-CV-KT20) gegeben und mit einem Polypropylengranulat (Stamylan P 412MN40 der Firma Sabic) und einem Haftvermittler (Fusabond MD353D der Firma DSM) zusammen einem Mischextruder (ZE 25 der Firma Berstorff) zugeführt und extrudiert, sodass 30 Masse-% Faseranteil realisiert wird. Nach Abkühlung entstehen faserverstärkte Polypropylen-Pellets, die nach Trocknung (4h, 110 °C, Trockenschrank) zu Normprüfkörpern (ISO 527) mittels einer Spritzgussmaschine (Allrounder 270 M500-90 der Firma Arburg) verarbeitet werden.

Ausgewählte mechanische Eigenschaften sind in Tabelle 6 im Vergleich zu den im herkömmlichen Verfahren (Weigel, Ganster, Fink, Gassan, Uihlein: Kunststoffe 92, 2002, S. 95 bis 97) hergestellten Kompositen angegeben. Aus Tabelle 6 ist ersichtlich, dass verglichen mit dem Referenzmaterial der erfindungsgemäße faserverstärkte Thermoplast, dessen Fasern mit der vorstehend beschriebenen Ponal^{®}/CMC-Mischung benetzt wurden, etwa gleiche Werten von Festigkeit, Modul, Dehnung und Schlagzähigkeit nach Charpy und Charpy (gekerbt) bei 23 °C aufweist (s. die mit "a" bezeichneten Werte). Die Wiederholung des Beispiels lieferte die mit "b" bezeichneten Werte und demonstriert die Reproduzierbarkeit des erfindungsgemäßen Herstellungsverfahrens. Bei - 18°C ist der Charpy-Wert und der Charpy (gekerbt)-Wert um ca. 16 % höher als der entsprechende Wert des Referenzmaterials.

**Tabelle 6:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 74 | 2,8 | 8,5 | 56 _{23°C} | 11,3 _{23°C} |
| | | | | 57_{-18°C} | 8,7_{-18°C} |
| aus Pellets (Ponal/CMC) 1/1 | a 71,8 | a 2,9 | a 9,2 | a 60 _{23°C} | a 12,1 _{23°C} |
| | | | | a 66,8_{-18°C} | - |
| | b 73,6 | b 2,9 | b 9,7 | b 63 _{23°C} | b 12,7 _{23°C} |
| | | | | b 65_{-18°C} | b 10,1_{-18°C} |

### Beispiel 7:

2 Garne des Cellulose-Regeneratfasermaterials Cordenka 700 der Firma Cordenka GmbH (1350 Einzelfilamente pro Garn, Einzelfasertiter 2440 dtex) werden in einem kontinuierlichen Dip-, Trocken- und Schneidprozess mit einer Geschwindigkeit von 21,5 m/min über eine mit einer Schlichtelösung beaufschlagte Benetzungsrolle geführt und dabei mit der Schlichtelösung gedippt, getrocknet und geschnitten. Als Schlichtelösung dient eine wässrige Polyvinylalkohol-Lösung (Schlichte PPL, Fa. BASF) mit einem Feststoffgehalt von 4 Gew.-%. Die Beaufschlagung der Benetzungswalze mit der Schlichtelösung erfolgt so, dass die gedippten Garne nach dem Trocknen, d.h. im ofentrockenen Zustand einen Schlichte-Auftrag von 8,5 Gew.-% aufweisen. Die Trocknung erfolgt kontinuierlich und kontaktlos in drei Rohröfen (Heraeus Typ RO 07/250, Nenntemperatur 1000 °C), die hintereinander durchlaufen werden. Hierbei hat der erste Ofen eine Temperatur von 410 °C, der zweite Ofen eine Temperatur von 220 °C und der dritte Ofen eine Temperatur von 175 °C. Die getrockneten Garne werden mit Hilfe einer Stapelfaserschneidmaschine (Fa. Neumag NMC 150) zu Kurzschnittmaterial mit einer Länge von 4 mm geschnitten. Es resultiert ein rieselfähiges Kurzschnittmaterial.

Zur Verarbeitung des rieselfähigen Kurzschnittmaterials wird dieses in eine separate Dosiervorrichtung (K-Tron K-CV-KT20) gegeben und mit einem Polypropylengranulat (Stamylan P 412MN40 der Firma Sabic) und einem Haftvermittler (Fusabond MD353D der Firma DSM) zusammen einem Mischextruder (ZE 25 der Firma Berstorff) zugeführt und extrudiert, sodass 30 Masse-% Faseranteil realisiert wird. Nach Abkühlung entstehen faserverstärkte Polypropylen-Pellets, die nach Trocknung (4h, 110 °C, Trockenschrank) zu Normprüfkörpern (ISO 527) mittels einer Spritzgussmaschine (Allrounder 270 M500-90 der Firma Arburg) verarbeitet werden.

Ausgewählte mechanische Eigenschaften sind in Tabelle 7 im Vergleich zu den im herkömmlichen Verfahren (Weigel, Ganster, Fink, Gassan, Uihlein: Kunststoffe 92, 2002, S. 95 bis 97) hergestellten Kompositen angegeben. Aus Tabelle 7 ist ersichtlich, dass verglichen mit dem Referenzmaterial der erfindungsgemäße faserverstärkte Thermoplast, dessen Fasern mit Polyvinylalkohol aus einer Schlichte PPL - Lösung benetzt wurden, bei etwa gleichen Werten von Festigkeit, Dehnung und Modul bei 23 °C eine deutlich erhöhte Schlagzähigkeit nach Charpy und nach Charpy (gekerbt) aufweist. Die Charpy-Schlagzähigkeit bei -18°C ist um 43 % höher als die des Referenzmaterials.

**Tabelle 7:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 74 | 2,8 | 8,5 | 56 _{23°C} | 11,3_{23°C} |
| | | | | 57_{-18°C} | 8,7_{-18°C} |
| aus Pellets (PPL) | 73,5 | 2,9 | 10 | 75 _{23°C} | 14,3_{23°C} |
| | | | | 81,3_{-18°C} | - |

### Beispiel 8:

2 Garne des Cellulose-Regeneratfasermaterials Cordenka 700 der Firma Cordenka GmbH (1350 Einzelfilamente pro Garn, Einzelfasertiter 2440 dtex) werden in einem kontinuierlichen Dip-, Trocken- und Schneidprozess mit einer Geschwindigkeit von 52 m/min über eine mit einer Schlichtelösung beaufschlagte Benetzungsrolle geführt und dabei mit der Schlichtelösung gedippt, getrocknet und geschnitten. Als Schlichtelösung dient eine Mischung aus gleichen Gewichtsteilen einer 4 Gew.% Festkörper enthaltenden wässrigen Polyvinylalkohol-Lösung (Schlichte PPL, Fa. BASF) und einer 6 Gew.% Festkörper enthaltenden wässrigen Stärke-Dispersion (Fa. Riedel-de-Haen). Die Beaufschlagung der Benetzungswalze mit der Schlichtelösung erfolgt so, dass die gedippten Garne nach dem Trocknen, d.h. im ofentrockenen Zustand einen Schlichte-Auftrag von 8,2 Gew.% aufweisen. Die kontinuierliche dreistufige Trocknung erfolgt in der ersten Stufe kontaktlos in einem Rohrofen (Heraeus Typ RO 07/250, Nenntemperatur 1000 °C). Die zweite und dritte Trocknungsstufe erfolgt mittels Kontakttrocknung auf einer ersten und zweiten beheizten Galette (Galettendurchmesser jeweils 12 cm), wobei beide Galetten jeweils vierfach umschlungen werden und wobei die erste Galette eine Temperatur von 175°C und die zweite Galette eine Temperatur von 170 °C aufweist. Die getrockneten Garne werden mit Hilfe einer Stapelfaserschneidmaschine (Fa. Neumag NMC 150) zu Kurzschnittmaterial mit einer Länge von 4 mm geschnitten. Es resultiert ein rieselfähiges Kurzschnittmaterial.

Zur Verarbeitung des rieselfähigen Kurzschnittmaterials wird dieses in eine separate Dosiervorrichtung (K-Tron K-CV-KT20) gegeben und mit einem Polypropylengranulat (Stamylan P 412MN40 der Firma Sabic) und einem Haftvermittler (Fusabond MD353D der Firma DSM) zusammen einem Mischextruder (ZE 25 der Firma Berstorff) zugeführt und extrudiert, sodass 30 Masse-% Faseranteil realisiert wird. Nach Abkühlung entstehen faserverstärkte Polypropylen-Pellets, die nach Trocknung (4h, 110 °C, Trockenschrank) zu Normprüfkörpern (ISO 527) mittels einer Spritzgussmaschine (Allrounder 270 M500-90 der Firma Arburg) verarbeitet werden.

Ausgewählte mechanische Eigenschaften sind in Tabelle 8 im Vergleich zu den im herkömmlichen Verfahren (Weigel, Ganster, Fink, Gassan, Uihlein: Kunststoffe 92, 2002, S. 95 bis 97) hergestellten Kompositen angegeben. Aus Tabelle 8 ist ersichtlich, dass verglichen mit dem Referenzmaterial der erfindungsgemäße faserverstärkte Thermoplast, dessen Fasern mit der vorstehend beschriebenen PPL/Stärke-Mischung benetzt wurden, bei etwa gleichen Werten von Festigkeit, Modul, Dehnung eine erheblich höhere Schlagzähigkeit nach Charpy und nach Charpy (gekerbt) bei 23°C aufweist. Bei -18°C ist der Charpy-Wert um 21 % höher und der Charpy (gekerbt)-Wert um 31% höher als der entsprechende Wert des Referenzmaterials.

**Tabelle 8:**

| Material | Festigkeit | Modul | Dehnung | Charpy | Charpy (gekerbt) |
|---|---|---|---|---|---|
| | MPa | GPa | % | kJ/m² | kJ/m² |
| Referenz | 74 | 2,8 | 8,5 | 56 _{23°C} | 11,3 _{23°C} |
| | | | | 57_{-18°C} | 8,7_{-18°C} |
| aus Pellets PPL/Stärke=1/1 | 72,6 | 2,8 | 10,8 | 82 _{23°C} | 13,9_{23°C} |
| | | | | 69_{-18°C} | 11,4_{-18°C} |

## Patentansprüche

1. Verfahren zur Herstellung rieselfähiger Pellets auf Basis cellulosischer Spinnfasern umfassend die Schritte
a) Benetzung mindestens eines cellulosischen Spinnfaserstrangs mit einer Dispersion eines Polymers und/oder Oligomers zum Aufbringen einer Schlichte, wobei das Polymer ausgewählt ist aus der Gruppe umfassend Stärke und deren Derivate, Cellulosederivate, Polyvinylacetat, Polyvinylalkohol, Polyacrylat oder eine Mischung der genannten Polymere, und wobei das Oligomer ein Dextrin oder ein Derivat hiervon ist,
b) Trocknung des mindestens einen Spinnfaserstrangs und
c) Zerkleinern des mindestens einen Spinnfaserstrangs in Pellets.

2. Verfahren nach Anspruch 1, **dadurch gekennzeichnet, dass** in Schritt a) 3 bis 50 Spinnfaserstränge simultan mit der Dispersion des Polymers und/oder Oligomers benetzt werden, die vor der Trocknung zusammengeführt werden.

3. Verfahren nach dem vorhergehenden Anspruch, **dadurch gekennzeichnet, dass** die Zusammenführung durch Verdrillung der Spinnfaserstränge erfolgt.

4. Verfahren nach dem vorhergehenden Anspruch, **dadurch gekennzeichnet, dass** die Verdrillung 5 bis 500 Drehungen, insbesondere 10 bis 30 Drehungen pro Meter Spinnfaserstrang beträgt.

5. Verfahren nach einem der vorhergehenden Ansprüche, **dadurch gekennzeichnet, dass** als cellulosische Spinnfasern synthetische Cellulosefasern und/oder cellulosehaltige Naturfasern, insbesondere Hanf, eingesetzt werden.

6. Verfahren nach dem vorhergehenden Anspruch, **dadurch gekennzeichnet, dass** Viskose-Fasern und/oder Lyocell-Fasern eingesetzt werden.

7. Verfahren nach einem der vorhergehenden Ansprüche, **dadurch gekennzeichnet, dass** die Schlichte im Garnherstellungsprozess auf zuvor nicht getrocknete Fasern aufgebracht wird.

8. Verfahren nach einem der vorhergehenden Ansprüche, **dadurch gekennzeichnet, dass** die Schlichte auf das fertig konfektionierte Garn in einem Nachbehandlungsschritt aufgebracht wird.

9. Verfahren nach einem der vorhergehenden Ansprüche, **dadurch gekennzeichnet, dass** die Benetzung durch Eintauchen in die Dispersion des Polymers und/oder Oligomers erfolgt.

10. Rieselfähige Pellets auf Basis von cellulosischen Spinnfasern aus mindestens einem zerkleinerten und eine Schlichte aus einem Polymer und/oder Oligomer aufweisenden Spinnfaserstrang, wobei das Polymer ausgewählt ist aus der Gruppe umfassend Stärke und deren Derivate, Cellulosederivate, Polyvinylalkohol, Polyvinylacetat, Polyacrylat oder eine Mischung der genannten Polymeren, und wobei das Oligomer aus einem Dextrin oder einem Derivat hiervon besteht.

11. Rieselfähige Pellets nach dem vorhergehenden Anspruch, **dadurch gekennzeichnet, dass** die Spinnfasern aus synthetischen Cellulosefasern und/oder cellulosehaltigen Naturfasern, insbesondere Hanf oder Flachs, bestehen.

12. Rieselfähige Pellets nach einem der Ansprüche 10 oder 11, **dadurch gekennzeichnet, dass** die Spinnfasern aus Viskosefasern und/oder Lyocellfasern bestehen

13. Rieselfähige Pellets nach einem der Ansprüche 10 bis 12, **dadurch gekennzeichnet, dass** die Pellets einen im wesentlichen kreisförmigem oder abgeflachten Querschnitt aufweisen.

14. Rieselfähige Pellets nach einem der Ansprüche 10 bis 13, **dadurch gekennzeichnet, dass** die Pellets einen Durchmesser von 1 bis 6 mm aufweisen.

15. Rieselfähige Pellets nach einem der Ansprüche 10 bis 14, **dadurch gekennzeichnet, dass** die Pellets eine Länge von 1 bis 40 mm aufweisen.

16. Rieselfähige Pellets nach einem der Ansprüche 10 bis 15, **dadurch gekennzeichnet, dass** die Pellets eine Schüttdichte von 100 g/l bis 450 g/l, insbesondere 150 g/l bis 450 g/l aufweisen.

17. Rieselfähige Pellets nach einem der Ansprüche 10 bis 16, **dadurch gekennzeichnet, dass** die Pellets nach dem Verfahren nach einem der Ansprüche 1 bis 9 herstellbar sind.

18. Verwendung der rieselfähigen Pellets nach einem der Ansprüche 10 bis 17 zur Faserverstärkung von Thermoplasten.

19. Verwendung nach Anspruch 18, **dadurch gekennzeichnet, dass** der zu verstärkende Thermoplast ausgewählt ist aus der Gruppe bestehend aus Homo- und Copolymeren von Polypropylen und Polyethylen, Polyamid 11, Polyamid 12, Polyamid 6, Polyethylenterephthalat, Polystyrol und schlagzähen Modifikationen hiervon, Polymilchsäure, weichgemachtem Polyvinylchlorid sowie thermoplastischen Elastomeren, Mischungen und Modifikationen hiervon.

20. Verfahren nach einem oder mehreren der Ansprüche 1 bis 9, **dadurch gekennzeichnet, dass** die Cellulosederivate Methylcellulose oder Carboxymethylcellulose sind.

21. Rieselfähige Pellets nach einem oder mehreren der Ansprüche 10 bis 17, **dadurch gekennzeichnet, dass** die Cellulosederivate Methylcellulose oder Carboxymethylcellulose sind.

## Claims

1. Process for manufacturing free-flowing pellets based on cellulosic spun fibers, comprising the following steps:
a) wetting at least one cellulosic spun-fiber strand with a dispersion of a polymer and/or an oligomer for the purpose of applying sizing, whereby the polymer is selected from the group comprising starch and its derivatives, cellulose derivatives, polyvinyl acetate, polyvinyl alcohol, polyacrylate, or a blend of the cited polymers, and whereby the oligomer is a dextrin or a derivative thereof,
b) drying the at least one spun-fiber strand, and
c) comminuting the at least one spun-fiber strand into pellets.

2. Process according to Claim 1, **characterized in that** in step a) 3 to 50 spun-fiber strands are wetted simultaneously with the dispersion of the polymer and/or oligomer and the strands are combined prior to drying.

3. Process according to the preceding claim, **characterized in that** the combination is performed by twisting the spun-fiber strands.

4. Process according to the preceding claim, **characterized in that** the twisting comprises 5 to 500, in particular 10 to 30 twists per meter of spun-fiber strand.

5. Process according to one of the preceding claims, **characterized in that** synthetic cellulose fibers and/or cellulose-containing natural fibers, in particular hemp, are used as the cellulosic spun fibers.

6. Process according to the preceding claim, **characterized in that** viscose and/or lycocell fibers are used.

7. Process according to one of the preceding claims, **characterized in that** the sizing in the yarn manufacturing process is applied to fibers that were not previously dried.

8. Process according to one of the preceding claims, **characterized in that** the sizing is applied to the finished yarn in an aftertreatment step.

9. Process according to one of the preceding claims, **characterized in that** the wetting is performed by dipping in the dispersion of the polymer and/or oligomer.

10. Free-flowing pellets based on cellulosic spun fibers, the pellets made from at least one comminuted spun-fiber strand having sizing made from a polymer and/or an oligomer, whereby the polymer is selected from the group comprising starch and its derivatives, cellulose derivatives, polyvinyl alcohol, polyvinyl acetate, polyacrylate, or a blend of the cited polymers, and whereby the oligomer is a dextrin or a derivative thereof.

11. Free-flowing pellets according to the preceding claim, **characterized in that** the spun fibers consist of synthetic cellulose fibers and/or cellulose-containing natural fibers, in particular hemp or flax.

12. Free-flowing pellets according to one of Claims 10 or 11, **characterized in that** the spun fibers consist of viscose and/or lyocell fibers.

13. Free-flowing pellets according to one of Claims 10 to 12, **characterized in that** the pellets have a substantially circular or flattened cross-section.

14. Free-flowing pellets according to one of Claims 10 to 13, **characterized in that** the pellets have a diameter of 1 to 6 mm.

15. Free-flowing pellets according to one of Claims 10 to 14, **characterized in that** the pellets have a length of 1 to 40 mm.

16. Free-flowing pellets according to one of Claims 10 to 15, **characterized in that** the pellets have a bulk density of 100 g/l to 450 g/l, in particular 150 g/l to 450 g/l.

17. Free-flowing pellets according to one of Claims 10 to 16, **characterized in that** the pellets can be manufactured with the process according to one of Claims 1 to 9.

18. Use of the free-flowing pellets according to one of Claims 10 to 17 for fiber reinforcement of thermoplastics.

19. Use according to Claim 18, **characterized in that** the thermoplastic to be reinforced is selected from the group consisting of homo- and copolymers of polypropylene and polyethylene, polyamide 11, polyamide 12, polyamide 6, polyethylene terephthalate, polystyrene and impact resistant modifications thereof, polylactic acid, plasticized polyvinylchloride, and of thermoplastic elastomers, blends, and modifications thereof.

20. Process according to one or more of Claims 1 to 9, **characterized in that** the cellulose derivatives are methyl cellulose or carboxymethylcellulose.

21. Free-flowing pellets according to one or more of Claims 10 to 17, **characterized in that** the cellulose derivatives are methyl cellulose or carboxymethylcellulose.

## Revendications

1. Procédé de fabrication de pastilles s'écoulant librement, à base de fibres textiles cellulosiques, comportant les étapes suivantes :
a) mouiller au moins un écheveau de fibres textiles cellulosiques avec une dispersion d'un polymère et/ou d'un oligomère pour y déposer un enduit, étant entendu que le polymère est choisi dans l'ensemble formé par l'amidon et ses dérivés, les dérivés de cellulose, le poly(acétate de vinyle), le poly(alcool vinylique) et les polyacrylates, ainsi que les mélanges de ces polymères, et que l'oligomère est une dextrine ou un dérivé de dextrine,
b) faire sécher cet écheveau de fibres au nombre d'au moins un,
c) et réduire en pastilles cet écheveau de fibres au nombre d'au moins un.

2. Procédé conforme à la revendication 1, **caractérisé en ce que** dans l'étape (a), ce sont de 3 à 50 écheveaux de fibres textiles que l'on mouille simultanément avec la dispersion de polymère et/ou d'oligomère, et que l'on rassemble avant de les faire sécher.

3. Procédé conforme à la revendication précédente, **caractérisé en ce qu'**on rassemble les écheveaux de fibres textiles en les torsadant.

4. Procédé conforme à la revendication précédente, **caractérisé en ce que** l'on torsade les écheveaux à raison de 5 à 500 tours, et en particulier de 10 à 30 tours, par mètre d'écheveau de fibres textiles

5. Procédé conforme à l'une des revendications précédentes, **caractérisé en ce que** l'on utilise, en tant que fibres textiles cellulosiques, des fibres cellulosiques synthétiques et/ou des fibres naturelles contenant de la cellulose, en particulier du chanvre.

6. Procédé conforme à la revendication précédente, **caractérisé en ce que** l'on utilise des fibres de viscose et/ou des fibres de lyocell.

7. Procédé conforme à l'une des revendications précédentes, **caractérisé en ce que** dans le procédé de fabrication de fil, l'enduit est déposé sur des fibres que l'on n'a pas fait sécher au préalable.

8. Procédé conforme à l'une des revendications précédentes, **caractérisé en ce que** l'enduit est déposé sur le fil confectionné fini, au cours d'une étape de post-traitement.

9. Procédé conforme à l'une des revendications précédentes, **caractérisé en ce que** le mouillage est effectué par immersion dans la dispersion de polymère et/ou d'oligomère.

10. Pastilles s'écoulant librement, à base de fibres textiles cellulosiques, obtenues à partir d'au moins un écheveau de fibres textiles, porteur d'un enduit formé d'un polymère et/ou d'un oligomère et réduit en morceaux, étant entendu que le polymère est choisi dans l'ensemble constitué par l'amidon et ses dérivés, les dérivés de cellulose, le poly(acétate de vinyle), le poly(alcool vinylique) et les polyacrylates, ainsi que les mélanges de ces polymères, et que l'oligomère consiste en une dextrine ou un dérivé de dextrine.

11. Pastilles s'écoulant librement, conformes à la revendication précédente, **caractérisées en ce que** les fibres textiles consistent en des fibres cellulosiques synthétiques et/ou des fibres naturelles contenant de la cellulose, en particulier du chanvre ou du lin.

12. Pastilles s'écoulant librement, conformes à l'une des revendications 10 et 11, **caractérisées en ce que** les fibres textiles consistent en des fibres de viscose et/ou des fibres de lyocell.

13. Pastilles s'écoulant librement, conformes à l'une des revendications 10 à 12, **caractérisées en ce que** ces pastilles présentent une section transversale pratiquement circulaire ou aplatie.

14. Pastilles s'écoulant librement, conformes à l'une des revendications 10 à 13, **caractérisées en ce que** ces pastilles présentent un diamètre de 1 à 6 mm.

15. Pastilles s'écoulant librement, conformes à l'une des revendications 10 à 14, **caractérisées en ce que** ces pastilles présentent une longueur de 1 à 40 mm.

16. Pastilles s'écoulant librement, conformes à l'une des revendications 10 à 15, **caractérisées en ce que** ces pastilles présentent une masse volumique en vrac de 100 à 450 g/L, et en particulier, de 150 à 450 g/L.

17. Pastilles s'écoulant librement, conformes à l'une des revendications 10 à 16, **caractérisées en ce que** ces pastilles peuvent être fabriquées selon un procédé conforme à l'une des revendications 1 à 9.

18. Utilisation de pastilles s'écoulant librement, conformes à l'une des revendications 10 à 17, pour renforcer des matériaux thermoplastiques au moyen de fibres.

19. Utilisation conforme à la revendication 18, **caractérisée en ce que** le matériau thermoplastique à renforcer est choisi dans l'ensemsemble constitué par les suivants : homopolymères polypropylène et polyéthylène et copolymères correspondants, polyamide 11, polyamide 12, polyamide 6, poly(éthylène téréphtalate), polystyrène et ses dérivés modifiés résistants au choc, poly(acide lactique), poly(chlorure de vinyle) plastifié, et élastomères thermoplastiques, leurs mélanges et leurs dérivés modifiés.

20. Procédé conforme à l'une ou plusieurs des revendications 1 à 9, **caractérisé en ce que** les dérivés de cellulose sont de la méthyl-cellulose ou de la carboxyméthyl-cellulose.

21. Pastilles s'écoulant librement, conformes à l'une des revendications 10 à 17, **caractérisées en ce que** les dérivés de cellulose sont de la méthyl-cellulose ou de la carboxyméthyl-cellulose.
